# EUROPÄISCHE PATENTSCHRIFT

(11) **EP 4 045 348 B1**
(45) Veröffentlichungstag und Bekanntmachung des Hinweises auf die Patenterteilung: **11.09.2024**
(21) Anmeldenummer: 20772292.7
(22) Anmeldetag: 16.09.2020
(51) Int. Cl.: B60K 6/48, B60K 6/387, B60W 10/02, B60W 10/113, B60W 10/06, B60W 10/08, F16H 61/688

(54) **VERFAHREN ZUM STEUERN EINES HYBRIDANTRIEBSSTRANGS EINES HYBRIDKRAFTFAHRZEUGS**
METHOD FOR CONTROLLING A HYBRID DRIVETRAIN OF A HYBRID MOTOR VEHICLE
PROCÉDÉ DE COMMANDE D'UNE CHAÎNE CINÉMATIQUE HYBRIDE D'UN VÉHICULE À MOTEUR HYBRIDE

(30) Priorität: 14.10.2019 DE 102019215761; 25.08.2020 DE 102020210728
(43) Veröffentlichungstag der Anmeldung: 24.08.2022
(73) Patentinhaber: Magna PT B.V. & Co. KG, 74199 Untergruppenbach (DE)
(72) Erfinder: PROST, Jacques, 74074 Heilbronn (DE); YU, Yang, 74080 Heilbronn (DE); KNÖPFLE, Phillipp, 71636 Ludwigsburg (DE); HOFFMEISTER, Thomas, 70825 Korntal-Münchingen (DE)
(74) Vertreter: Zangger, Bernd
(86) Internationale Anmeldenummer: PCT/EP2020/075827
(87) Internationale Veröffentlichungsnummer: WO 2021/073825

(56) Entgegenhaltungen:
- WO-A1-2017/202419
- WO-A1-2018/130485
- DE-A1- 102007 042 724
- DE-A1- 102010 028 936
- DE-C5- 102010 004 711
- GB-A- 2 449 981

## Beschreibung

### Gebiet der Erfindung

Die vorliegende Erfindung betrifft ein Verfahren zum Steuern eines Hybridantriebsstrangs eines Hybridkraftfahrzeugs, wobei der Hybridantriebsstrang ein Doppelkupplungsgetriebe mit zwei Teilgetrieben aufweist, deren Getriebeeingangswellen jeweils mittels einer Reibkupplung mit einer ersten Antriebseinheit antriebswirksam koppelbar sind, wobei eine der beiden Getriebeeingangswellen mit einer zweiten Antriebseinheit antriebswirksam gekoppelt oder koppelbar ist.

### Stand der Technik

Auf dem Gebiet der Fahrzeuggetriebe sind Doppelkupplungsgetriebe in der beschriebenen Art allgemein bekannt. Doppelkupplungsgetriebe weisen eine Doppelkupplung mit einer ersten Reibkupplung und einer zweiten Reibkupplung sowie ein erstes Teilgetriebe und ein zweites Teilgetriebe auf. Dabei ist jeweils einem Teilgetriebe funktional eine Reibkupplung zugeordnet. Das jeweilige Teilgetriebe kann über die ihm zugeordnete Reibkupplung antriebswirksam mit einer Antriebseinheit verbunden werden. Durch das Bereitstellen dieser beiden Leistungsübertragungspfade ist es möglich, Gangwechsel ohne Zugkraftunterbrechung durchzuführen. Dabei wird das von der Antriebseinheit bereitgestellte Antriebsmoment durch überschneidende Betätigung von einem Leitungsübertragungspfad auf den anderen zugkraftunterbrechungsfrei, nämlich kontinuierlich, übergeben.

Weiterhin ist es bekannt Antriebsstränge von Kraftfahrzeugen zu hybridisieren. Darunter ist eine Kombination von zumindest zwei unterschiedlichen Antriebseinheiten, die Antriebsleistung zum Betrieb des Kraftfahrzeugs bereitstellen, zu verstehen. In der gängisten Ausführung weisen Hybridkraftfahrzeuge eine Verbrennungskraftmaschine sowie zumindest eine elektrische Maschine, die sowohl elektromotorisch wie auch generatorisch betreibbar ist, auf.

Zur Hybridisierung von Antriebssträngen mit einem Doppelkupplungsgetriebe sind unterschiedliche Konzepte bekannt. Beispielsweise ist es bekannt, eine elektrische Maschine mit einem der zwei Teilgetriebe des Doppelkupplungsgetriebes zu verbinden - im Leistungsfluss gesehen ist die elektrische Maschine in diesem Fall hinter der jeweiligen dem Teilgetriebe zugeordneten Reibkupplung angeordnet.

Eine derartige Anordnung wird beispielsweise in dem Dokument DE 10 2010 004 711 A1 beschrieben.

Es ist weiterhin bekannt in einem derartigen Aufbau eines Hybridantriebsstrangs während eines Schaltvorgangs insbesondere zur Unterstützung der Synchronisation der Gänge die elektrische Maschine zu nutzen, um der erhöhten Trägheit des Teilgetriebes an das die elektrische Maschine angebunden ist zu begegnen und so die Synchronisationseinheit vor zu hoher mechanischer Belastung zu schützen. Zu berücksichtigen ist in dieser konstruktiven Ausführungsvariante eines Hybridantriebsstrangs insbesondere der Fehlerfall der elektrischen Maschine und der damit verbundene Ausfall der Synchronisationsunterstützung seitens der elektrischen Maschine.

Aus der DE 10 2007 042 724 A1 ist ein Verfahren zum Steuern eines Hybridantriebsstrangs eines Hybridkraftfahrzeugs bekannt, wobei der Hybridantriebsstrang ein Doppelkupplungsgetriebe mit zwei Teilgetrieben aufweist, deren Getriebeeingangswellen jeweils mittels einer Reibkupplung mit einer ersten Antriebseinheit antriebswirksam koppelbar sind, wobei eine der beiden Getriebeeingangswellen mit einer zweiten Antriebseinheit antriebswirksam gekoppelt oder koppelbar ist.

Aus der DE 10 2004 035 534 A1 ist bei einem Synchronisationsvorgang zur Vorbereitung eines Gangwechsels bekannt, bei einzulegendem Rückwärtsgang im Falle einer Fehlfunktion der zweiten Antriebseinheit die Reibkupplung, die dem Teilgetriebe, dessen Getriebeeingangswelle mit der zweiten Antriebseinheit antriebswirksam gekoppelt oder koppelbar ist, zugeordnet ist, zumindest kurzzeitig in Schlupf gebracht wird.

### Zusammenfassung der Erfindung

Es ist eine Aufgabe der Erfindung ein Verfahren zum Steuern eines Hybridantriebsstrangs anzugeben, das es ermöglicht das mit einer zweiten Antriebseinheit, wie beispielsweise einer elektrischen Maschine, antriebswirksam verbundene Teilgetriebe eines Doppelkupplungsgetriebes im Falle eines Ausfalls bzw. Fehlerfalls der zweiten Antriebseinheit trotzdem auf eine gewünschte Synchronisationsdrehzahl zu bringen, ohne dabei die Synchronisationseinheit übermäßig mechanisch zu belasten.

Die Lösung der Aufgabe erfolgt durch ein Verfahren zum Steuern eines Hybridantriebsstrangs eines Hybridkraftfahrzeugs mit den Merkmalen gemäß Anspruch 1.

Dabei weist der Hybridantriebsstrang ein Doppelkupplungsgetriebe mit zwei Teilgetrieben auf, deren Getriebeeingangswellen jeweils mittels einer Reibkupplung mit einer ersten Antriebseinheit antriebswirksam koppelbar sind, wobei eine der beiden Getriebeeingangswellen mit einer zweiten Antriebseinheit antriebswirksam gekoppelt oder koppelbar ist, wobei bei einem Synchronisationsvorgang zur Vorbereitung eines Gangwechsels im Falle einer Fehlfunktion der zweiten Antriebseinheit die Reibkupplung die dem Teilgetriebe dessen Getriebeeingangswelle mit der zweiten Antriebseinheit antriebswirksam gekoppelt oder koppelbar ist, zugeordnet ist, zumindest kurzzeitig in Schlupf gebracht wird, sodass das Teilgetriebe und die zweite Antriebseinheit über die erste Antriebseinheit auf eine Synchronisationsdrehzahl eingestellt werden.

Das erfindungsgemäße Verfahren zum Steuern eines Hybridantriebsstrangs eines Hybridkraftfahrzeugs findet in einem Hybridantriebsstrang Anwendung der folgendes aufweist:
- eine erste Antriebseinheit,
- eine zweite Antriebseinheit und
- ein Doppelkupplungsgetriebe umfassend zwei Teilgetriebe, deren Getriebeeingangswellen jeweils mittels einer Reibkupplung mit der ersten Antriebseinheit antriebswirksam koppelbar sind.

Entsprechend der vorliegenden Erfindung ist die zweite Antriebseinheit mit einer der beiden Getriebeeingangswellen antriebswirksam gekoppelt oder koppelbar.

Ist die Drehzahl der ersten Antriebseinheit bei einer geforderten Ganghochschaltung größer als die einzustellende Synchrondrehzahl oder ist die Drehzahl der ersten Antriebseinheit bei einer geforderten Gangrückschaltung kleiner als die einzustellende Synchrondrehzahl, dann wird ein geforderter Drehzahlsprung zur Einstellung der Synchronisationsdrehzahl erfindungsgemäß im Wesentlichen zur Hälfte mit der jeweiligen Reibkupplung eingestellt ("half intermediate clutching").

Weiterbildungen der Erfindung sind in den abhängigen Ansprüchen, der Beschreibung sowie den beigefügten Zeichnungen angegeben.

Besonders bevorzugt ist die erste Antriebseinheit als eine Verbrennungskraftmaschine und die zweite Antriebseinheit als eine elektrische Maschine ausgeführt. Die elektrische Maschine kann sowohl als Elektromotor wie auch als Generator betrieben werden.

Bevorzugt wird ein geforderter Drehzahlsprung zur Einstellung der Synchronisationsdrehzahl mit der jeweiligen Reibkupplung eingestellt ("full intermediate clutching"), wenn bei einer geforderten Ganghochschaltung die Drehzahl der ersten Antriebseinheit kleiner oder gleich der einzustellenden Synchronisationsdrehzahl, also der Ziel-Synchronisationsdrehzahl, ist oder wenn bei einer geforderten Gangrückschaltung die Drehzahl der ersten Antriebseinheit größer oder gleich der einzustellenden Synchronisationsdrehzahl ist.

Bevorzugt wird bei einer Zughochschaltung und bei einer Schubrückschaltung ohne Zugkraftunterbrechung ein geforderter Drehzahlsprung zur Einstellung der Synchronisationsdrehzahl im Wesentlichen zur Hälfte mit der jeweiligen Reibkupplung eingestellt

Bevorzugt wird bei einer Zugrückschaltung und bei einer Schubhochschaltung ohne Zugkraftunterbrechung ein geforderter Drehzahlsprung zur Einstellung der Synchronisationsdrehzahl vollständig mit der jeweiligen Reibkupplung eingestellt.

Vorzugsweise weist das Doppelkupplungsgetriebe ein erstes Teilgetriebe und ein zweites Teilgetriebe auf, wobei das erste Teilgetriebe eine erste Getriebeeingangswelle umfasst und das zweite Teilgetriebe eine zweite Getriebeeingangswelle umfasst, wobei die erste Getriebeeingangswelle mittels einer ersten Reibkupplung mit der ersten Antriebseinheit koppelbar ist und die zweite Getriebeeingangswelle mittels einer zweiten Reibkupplung mit der ersten Antriebseinheit koppelbar ist und wobei die zweite Getriebeeingangswelle mit der zweiten Antriebseinheit gekoppelt oder koppelbar ist.

### Kurzbeschreibung der Zeichnungen

Die Erfindung wird im Folgenden beispielhaft unter Bezugnahme auf die Zeichnungen beschrieben.
- Fig. 1: zeigt eine schematische Darstellung eines Hybridantriebsstrangs.
- Fig. 2: zeigt ein Diagramm "Drehzahl vs. Zeit" im Betriebszustand des Hybridkraftfahrzeugs "Zughochschaltung".
- Fig. 3: zeigt ein Diagramm "Drehzahl vs. Zeit" im Betriebszustand des Hybridkraftfahrzeugs "Schubrückschaltung".
- Fig. 4: zeigt ein Diagramm "Drehzahl vs. Zeit" im Betriebszustand des Hybridkraftfahrzeugs "Zugrückschaltung".
- Fig. 5: zeigt ein Diagramm "Drehzahl vs. Zeit" im Betriebszustand des Hybridkraftfahrzeugs "Schubhochschaltung".

### Detaillierte Beschreibung der Erfindung

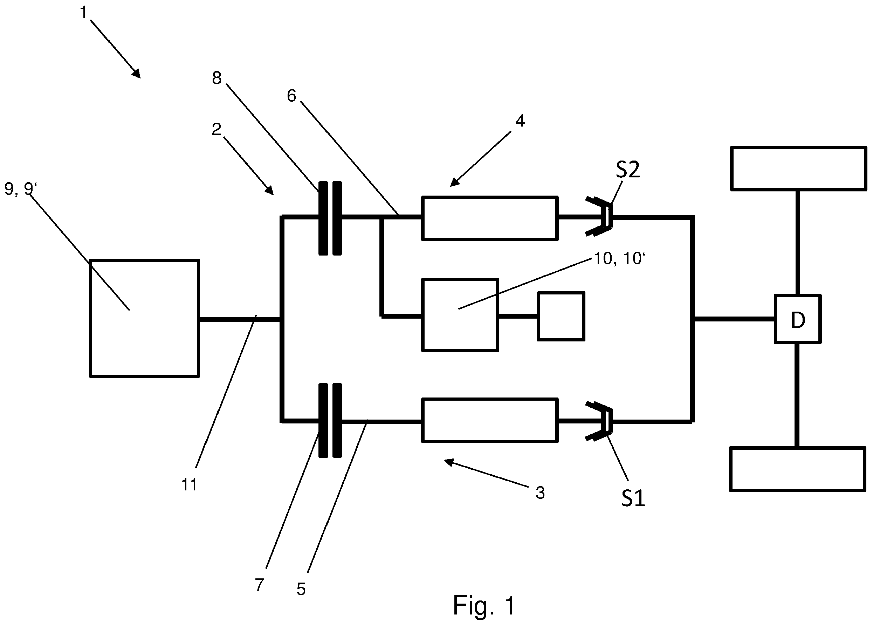

Fig. 1 zeigt einen beispielhaften Hybridantriebsstrang 1 für ein Hybridkraftfahrzeug, in dem das erfindungsgemäße Verfahren Anwendung findet.

Der in Fig. 1 dargestellte Hybridantriebsstrang 1 weist eine erste Antriebseinheit 9, nämlich eine Verbrennungskraftmaschine 9', eine zweite Antriebseinheit 10, nämlich eine elektrische Maschine 10', sowie ein Doppelkupplungsgetriebe 2 auf.

Das Doppelkupplungsgetriebe 2 weist ein erstes Teilgetriebe 3 mit einer ersten getriebeeingangswelle 5 und ein zweites Teilgetriebe 4 mit einer zweiten Getriebeeingangswelle 6 auf.

Die erste Getriebeeingangswelle 5 des ersten Teilgetriebes 3 ist über eine erste Reibkupplung 7 antriebswirksam mit einer Kurbelwelle 11 verbindbar. Die Kurbelwelle 11 ist antriebswirksam entweder direkt wie in der Fig. 1 dargestellt oder über ein Trennelement mit der Verbrennungskraftmaschine 9' verbunden. Dem ersten Teilgetriebe 3 sind sämtliche ungeraden Gangstufen des Doppelkupplungsgetriebes 2 zugeordnet. Die erste Reibkupplung 7 und das erste Teilgetriebe 3 bilden einen ersten Leistungsübertragungspfad. Hinter dem ersten Teilgetriebe 3 ist eine erste Schaltkupplung S1 zur Trennung der Abtriebswelle vom Differential D.

Die zweite Getriebeeingangswelle 6 des zweiten Teilgetriebes 4 ist über eine zweite Reibkupplung 8 antriebswirksam mit der Kurbelwelle 11 verbindbar. Die Kurbelwelle 11 ist antriebswirksam mit der Verbrennungskraftmaschine 9' verbunden. Dem zweiten Teilgetriebe 4 sind sämtliche geraden Gangstufen des Doppelkupplungsgetriebes 2 zugeordnet. Die zweite Reibkupplung 8 und das zweite Teilgetriebe 4 bilden mit einer zweiten Schaltkupplung S2 einen zweiten Leistungsübertragungspfad.

Die elektrische Maschine 10` ist antriebswirksam mit der zweiten Getriebeeingangswelle 6 verbunden.

Ein von der Verbrennungskraftmaschine 9' und/oder von der elektrischen Maschine 10` bereitgestelltes Antriebsmoment wird wechselweise über ein durch Schlie-βen der betreffenden Reibkupplung 7, 8 aktiviertes Teilgetriebe 3, 4 übertragen, d.h. wechselweise über den ersten Leistungsübertragungspfand und den zweiten Leistungsübertragungspfad. Ein Wechsel des Antriebsmoments von dem ersten Teilgetriebe 3 auf das zweite Teilgetriebe 4 oder umgekehrt erfolgt durch einen überschneidenden Betrieb der ersten Reibkupplung 7 und der zweiten Reibkupplung 8 unter Öffnen und Schließen der Schaltkupplungen S1 und S2.

Im Falle einer Fehlfunktion der elektrischen Maschine 10` wird bei einem Synchronisationsvorgang zur Vorbereitung eines Gangwechsels, wie beispielsweise bei einem Wechsel des Antriebsmoments von dem ersten Teilgetriebe 3 auf das zweite Teilgetriebe 4, die zweite Reibkupplung 8 zumindest kurzzeitig in Schlupf gebracht bzw. geschlossen, sodass das zweite Teilgetriebe 4 und die elektrische Maschine 10` über die erste Antriebseinheit 9, nämlich die Verbrennungskraftmaschine 9`, auf eine Synchronisationsdrehzahl eingestellt werden. Die Antriebsleistung zum Betrieb des Hybridkraftfahrzeugs wird währenddessen ungestört über den ersten Leistungsübertragungspfad übertragen.

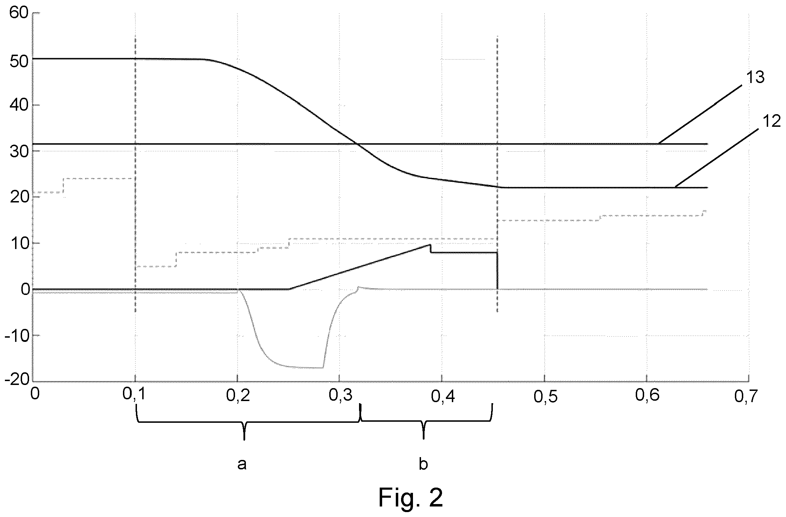

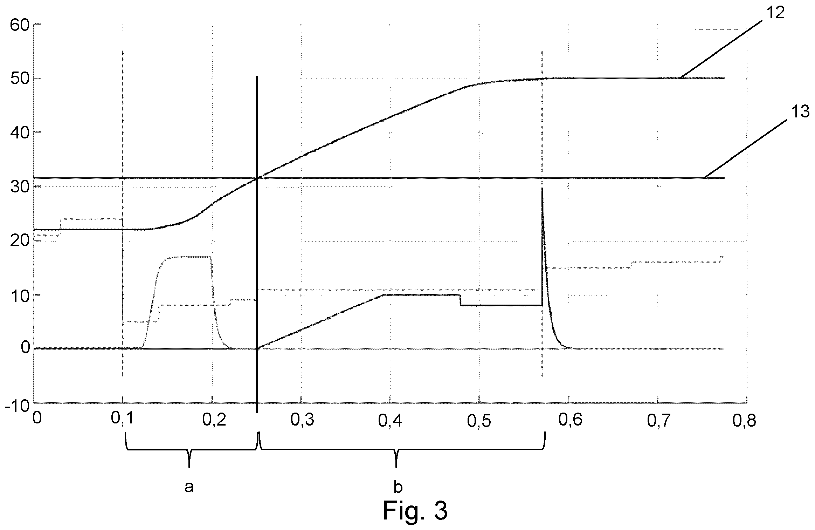

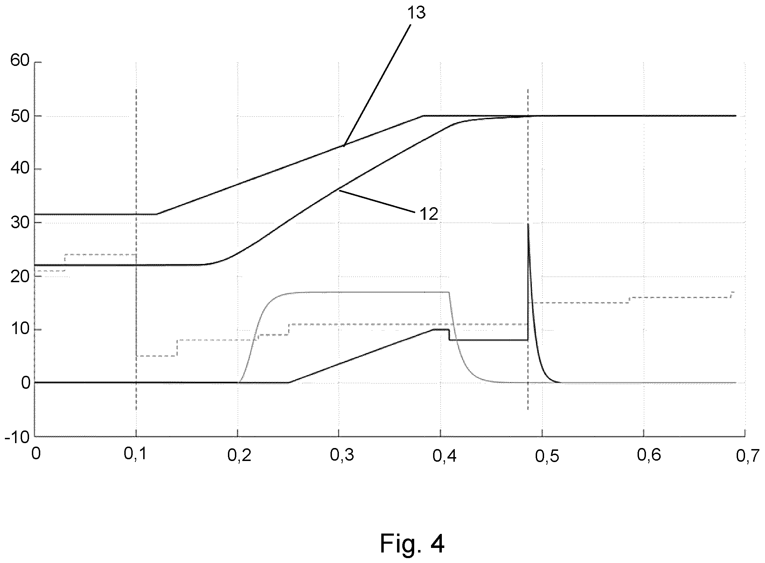

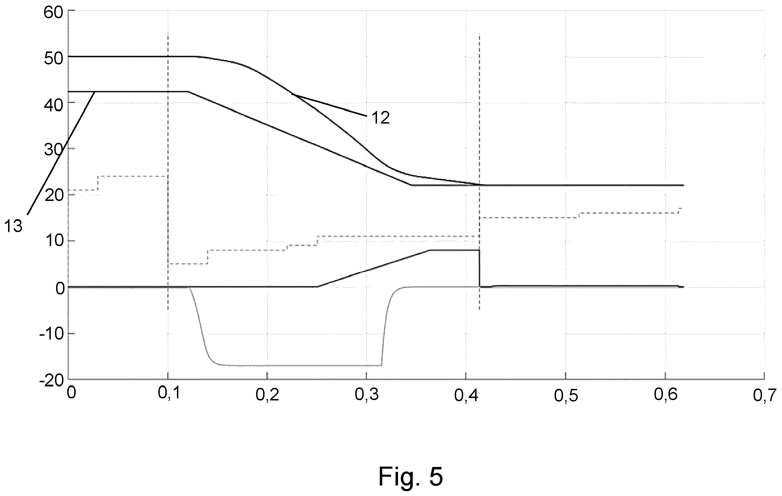

Im Folgenden wird zur näheren Beschreibung des erfindungsgemäßen Verfahrens zwischen vier Betriebszuständen des Hybridkraftfahrzeugs unterschieden, nämlich zwischen einer Zughochschaltung (Fig. 2), einer Schubrückschaltung (Fig. 3), einer Zugrückschaltung (Fig. 4) und einer Schubhochschaltung (Fig. 5).

In Fig. 2 bis Fig. 5 ist jeweils einer der oben genannten Betriebszustände dargestellt, wobei in sämtlichen Diagrammen auf der Abszisse die Zeit in Sekunden [s] und auf der Ordinate die Drehzahl in pro Sekunde [s⁻¹] aufgetragen ist. Die jeweils mit "12" gekennzeichneten Kurven beschreiben den Drehzahlverlauf der zweiten Getriebeeingangswelle 6 über die Zeit. Die jeweils mit "13" gekennzeichneten Kurven beschreiben den Drehzahlverlauf der Kurbelwelle 11 über die Zeit.

Fig. 2 zeigt den Betriebszustand "Zughochschaltung". Der Schaltablauf für ein Doppelkupplungsgetriebe mit einem entsprechenden Verfahren von einem niedriger übersetzenden ungeraden Gang in einen höher übersetzenden geraden Gang erfolgt beispielsweise indem der niedriger übersetzte ungerade Gang im ersten Teilgetriebe geschaltet ist und die erste Reibkupplung zwischen der Verbrennungskraftmaschine und der ersten Getriebeeingangswelle geschlossen ist. Derart wird Antriebsmoment über den ersten Leistungsübertragungspfad des Doppelkupplungsgetriebes übertragen. Während dieser Zeit wird auf der zweiten Getriebeeingangswelle bei geöffneter zweiter Reibkupplung zwischen der Verbrennungskraftmaschine und der zweiten Getriebeeingangswelle der nächstfolgende Gang, also der höher übersetzende gerade Gang, eingelegt, wobei die Synchronisation der zweiten Getriebeeingangswelle durch einen schlupfenden Kontakt der zweiten Reibkupplung unterstützt wird. In dem vorliegenden Betriebsfall "Zughochschaltung" ist während dem Synchronisationsvorgang die Drehzahl der Verbrennungskraftmaschine 9' bzw. der Kurbelwelle 11 nur in der ersten Hälfte, nämlich in einem ersten Zeitintervall a, niedriger als die Drehzahl der zweiten Getriebeeingangswelle 6. Durch einen schlupfenden Kontakt der zweiten Reibkupplung 8 im ersten Zeitintervall a wird die Drehzahl der zweiten Getriebeeingangswelle 6 seitens der Verbrennungskraftmaschine 9' bzw. der Kurbelwelle 11 herabgezogen - hier liefert die Verbrennungskraftmaschine 9' ein negatives Drehmoment und die zweite Getriebeeingangswelle 6 wird abgebremst. Im zweiten Zeitintervall b ist die Drehzahl der Verbrennungskraftmaschine 9' bzw. der Kurbelwelle 11 höher als die der zweiten Getriebeeingangswelle 6 - hier liefert die Verbrennungskraftmaschine 9' ein positives Drehmoment und die zweite Getriebeeingangswelle 6 würde durch einen schlupfenden Kontakt der zweiten Reibkupplung 8 beschleunigt werden. In diesem zweiten Zeitintervall b ist die zweite Reibkupplung 8 geöffnet, um so ein Beschleunigen der zweiten Getriebeeingangswelle 6 in diesem Zeitintervall zu verhindern. Im zweiten Zeitintervall b übernimmt die Synchronisationseinheit die weitere Synchronisationsarbeit.

Fig. 3 zeigt den Betriebszustand "Schubrückschaltung". In diesem Betriebsfall ist während dem Synchronisationsvorgang die Drehzahl der Verbrennungskraftmaschine 9' bzw. der Kurbelwelle 11 nur in der ersten Hälfte, nämlich in einem ersten Zeitintervall a, höher als die Drehzahl der zweiten Getriebeeingangswelle 6.Durch einen schlupfenden Kontakt der zweiten Reibkupplung 8 im ersten Zeitintervall a wird die Drehzahl der zweiten Getriebeeingangswelle 6 seitens der Verbrennungskraftmaschine 9' bzw. der Kurbelwelle 11 hochgezogen - hier liefert die Verbrennungskraftmaschine 9' ein positives Drehmoment und die zweite Getriebeeingangswelle 6 wird beschleunigt. Im zweiten Zeitintervall b ist die Drehzahl der Verbrennungskraftmaschine 9' bzw. der Kurbelwelle 11 niedriger als die der zweiten Getriebeeingangswelle 6 - hier liefert die Verbrennungskraftmaschine 9' ein negatives Drehmoment und die zweite Getriebeeingangswelle 6 würde durch einen schlupfenden Kontakt der zweiten Reibkupplung 8 abgebremst werden. In diesem zweiten Zeitintervall b ist die zweite Reibkupplung 8 geöffnet, um so ein Abbremsen der zweiten Getriebeeingangswelle 6 in diesem Zeitintervall zu verhindern.

Für die in Fig. 2 und Fig. 3 gezeigten Betriebszustände ist somit zur Synchronisation ein sogenanntes "half intermediate clutching" von Nöten, d.h. ein geforderter Drehzahlsprung zur Einstellung der Synchronisationsdrehzahl wird im Wesentlichen zur Hälfte mit der zweiten Reibkupplung 8 eingestellt.

Fig. 4 zeigt den Betriebszustand "Zugrückschaltung". In diesem Betriebsfall ist während dem gesamten Synchronisationsvorgang die Drehzahl der Verbrennungskraftmaschine 9' bzw. der Kurbelwelle 11 niedriger als die Drehzahl der zweiten Getriebeeingangswelle 6 - hier liefert die Verbrennungskraftmaschine 9' ein negatives Drehmoment und die zweite Getriebeeingangswelle 6 wird durch einen schlupfenden Kontakt der zweiten Reibkupplung 8 während des gesamten Synchronisationsvorgangs abgebremst.

Fig. 5 zeigt den Betriebszustand "Schubhochschaltung". In diesem Betriebsfall ist während dem gesamten Synchronisationsvorgang die Drehzahl der Verbrennungskraftmaschine 9' bzw. der Kurbelwelle 11 höher als die Drehzahl der zweiten Getriebeeingangswelle 6 - hier liefert die Verbrennungskraftmaschine 9' ein positives Drehmoment und die zweite Getriebeeingangswelle 6 wird durch einen schlupfenden Kontakt der zweiten Reibkupplung 8 während des gesamten Synchronisationsvorgangs beschleunigt.

Für die in Fig. 4 und Fig. 5 gezeigten Betriebszustände ist somit zur Synchronisation ein sogenanntes "full intermediate clutching" von Nöten, d.h. ein geforderter Drehzahlsprung zur Einstellung der Synchronisationsdrehzahl wird zur Gänze mit der zweiten Reibkupplung 8 eingestellt.

Das Maß der Abbremsung bzw. der Beschleunigung der zweiten Getriebeeingangswelle 6 richtet sich jeweils nach der einzustellenden Synchronisationsdrehzahl der zweiten Getriebeeingangswelle 6.

### Bezugszeichenliste

- 1: Hybridantriebsstrang
- 2: Doppelkupplungsgetriebe
- 3: Erstes Teilgetriebe
- 4: Zweites Teilgetriebe
- 5: Erste Getriebeeingangswelle
- 6: Zweite Getriebeeingangswelle
- 7: Erste Reibkupplung
- 8: Zweite Reibkupplung
- 9: Erste Antriebseinheit
- 9`: Verbrennungskraftmaschine
- 10: Zweite Antriebseinheit
- 10`: Elektrische Maschine
- 11: Kurbelwelle
- 12: Drehzahlverlauf der zweiten Getriebeeingangswelle (Sekundärseite der zweiten Reibkupplung)
- 13: Drehzahlverlauf der Kurbelwelle (Primärseite der zweiten Reibkupplung)

- a: Erstes Zeitintervall
- b: Zweites Zeitintervall

## Patentansprüche

1. Verfahren zum Steuern eines Hybridantriebsstrangs (1) eines Hybridkraftfahrzeugs, wobei der Hybridantriebsstrang (1) ein Doppelkupplungsgetriebe (2) mit zwei Teilgetrieben (3, 4) aufweist, deren Getriebeeingangswellen (5, 6) jeweils mittels einer Reibkupplung (7, 8) mit einer ersten Antriebseinheit (9) antriebswirksam koppelbar sind, wobei eine der beiden Getriebeeingangswellen (5, 6) mit einer zweiten Antriebseinheit (10) antriebswirksam gekoppelt oder koppelbar ist, wobei bei einem Synchronisationsvorgang zur Vorbereitung eines Gangwechsels im Falle einer Fehlfunktion der zweiten Antriebseinheit (10) die Reibkupplung (7, 8) die dem Teilgetriebe (3, 4) dessen Getriebeeingangswelle (5, 6) mit der zweiten Antriebseinheit (10) antriebswirksam gekoppelt oder koppelbar ist, zugeordnet ist zumindest kurzzeitig in Schlupf gebracht wird, sodass das Teilgetriebe (3, 4) und die zweite Antriebseinheit (10) über die erste Antriebseinheit (9) auf eine Synchronisationsdrehzahl eingestellt werden, **dadurch gekennzeichnet, dass** ein geforderter Drehzahlsprung zur Einstellung der Synchronisationsdrehzahl im Wesentlichen zur Hälfte mit der jeweiligen Reibkupplung (7, 8) eingestellt wird, wenn bei einer geforderten Ganghochschaltung die Drehzahl der ersten Antriebseinheit (9) größer der einzustellenden Synchronisationsdrehzahl ist oder wenn bei einer geforderten Gangrückschaltung die Drehzahl der ersten Antriebseinheit (9) kleiner der einzustellenden Synchronisationsdrehzahl ist.

2. Verfahren nach Anspruch 1,
**dadurch gekennzeichnet, dass** die erste Antriebseinheit (9) als eine Verbrennungskraftmaschine (9`) ausgeführt ist.

3. Verfahren nach Anspruch 1 oder 2,
**dadurch gekennzeichnet, dass** die zweite Antriebseinheit (10) als eine elektrische Maschine (10`) ausgeführt ist.

4. Verfahren nach Anspruch 1, 2 oder 3,
**dadurch gekennzeichnet, dass** ein geforderter Drehzahlsprung zur Einstellung der Synchronisationsdrehzahl vollständig mit der jeweiligen Reibkupplung (7, 8) abgebaut wird, wenn bei einer geforderten Ganghochschaltung die Drehzahl der ersten Antriebseinheit (9) kleiner oder gleich der einzustellenden Synchronisationsdrehzahl ist oder wenn bei einer geforderten Gangrückschaltung die Drehzahl der ersten Antriebseinheit (9) größer oder gleich der einzustellenden Synchronisationsdrehzahl ist.

5. Verfahren nach Anspruch 1, 2 oder 3,
**dadurch gekennzeichnet, dass** bei einer Zughochschaltung und bei einer Schubrückschaltung ein geforderter Drehzahlsprung zur Einstellung der Synchronisationsdrehzahl im Wesentlichen zur Hälfte mit der jeweiligen Reibkupplung (7, 8) eingestellt wird.

6. Verfahren nach einem der vorhergehenden Ansprüche,
**dadurch gekennzeichnet, dass** das Doppelkupplungsgetriebe (2) ein erstes Teilgetriebe (3) und ein zweites Teilgetriebe (4) aufweist, wobei das erste Teilgetriebe (3) eine erste Getriebeeingangswelle (5) umfasst und das zweite Teilgetriebe (4) eine zweite Getriebeeingangswelle (6) umfasst, wobei die erste Getriebeeingangswelle (5) mittels einer ersten Reibkupplung (7) mit der ersten Antriebseinheit (9) koppelbar ist und die zweite Getriebeeingangswelle (6) mittels einer zweiten Reibkupplung (8) mit der ersten Antriebseinheit (9) koppelbar ist und wobei die zweite Getriebeeingangswelle (6) mit der zweiten Antriebseinheit (10) gekoppelt oder koppelbar ist.

## Claims

1. Method for controlling a hybrid drivetrain (1) of a hybrid motor vehicle, where the hybrid drivetrain (1) has a dual-clutch transmission (2) having two sub-transmissions (3, 4) of which the transmission input shafts (5, 6) are in each case able to be operatively coupled for driving to a first drive unit (9) by means of a friction clutch (7, 8), wherein one of the two transmission input shafts (5, 6) is operatively coupled, or able to be operatively coupled, for driving to a second drive unit (10), wherein during a synchronization procedure for preparing a gear shift in the event of a malfunction of the second drive unit (10), the friction clutch (7, 8) which is assigned to that sub-transmission (3, 4) of which the transmission input shaft (5, 6) is operatively coupled, or able to be operatively coupled, for driving to the second drive unit (10) is at least briefly placed in slip in such a way that the sub-transmission (3, 4) and the second drive unit (10) by way of the first drive unit (9) are set to a synchronization rotation speed, **characterized in that** a required rotation speed jump for setting the synchronization rotation speed is set substantially by half by the respective friction clutch (7, 8) if in the event of a required upshift in gear the rotation speed of the first drive unit (9) is higher than the synchronization rotation speed to be set, or if in the event of a required downshift in gear the rotation speed of the first drive unit (9) is lower than the synchronization rotation speed to be set.

2. Method according to Claim 1,
**characterized in that** the first drive unit (9) is embodied as an internal combustion engine (9').

3. Method according to Claim 1 or 2,
**characterized in that** the second drive unit (10) is embodied as an electric machine (10').

4. Method according to Claim 1, 2 or 3, **characterized in that** a required rotation speed jump for setting the synchronization rotation speed is completely absorbed by the respective friction clutch (7, 8) if in the event of a required upshift in gear the rotation speed of the first drive unit (9) is lower than or equal to the synchronization rotation speed to be set, or if in the event of a required downshift in gear the rotation speed of the first drive unit (9) is higher than or equal to the synchronization rotation speed to be set.

5. Method according to Claim 1, 2 or 3, **characterized in that** in the event of a traction upshift and in the event of a thrust downshift a required rotation speed jump for setting the synchronization rotation speed is set substantially by half by the respective friction clutch (7, 8).

6. Method according to one of the preceding claims, **characterized in that** the dual-clutch transmission (2) has a first sub-transmission (3) and a second sub-transmission (4), wherein the first sub-transmission (3) comprises a first transmission input shaft (5) and the second sub-transmission (4) comprises a second transmission input shaft (6), wherein the first transmission input shaft (5) is able to be coupled to the first drive unit (9) by means of a first friction clutch (7), and the second transmission input shaft (6) is able to be coupled to the first drive unit (9) by means of a second friction clutch (8), and wherein the second transmission input shaft (6) is coupled, or able to be coupled, to the second drive unit (10).

## Revendications

1. Procédé de commande d'une chaîne cinématique hybride (1) d'un véhicule automobile hybride, la chaîne cinématique hybride (1) présentant une transmission à embrayage double (2) avec deux transmissions partielles (3, 4) dont les arbres d'entrée de transmission (5, 6) peuvent respectivement être couplés en entraînement à une première unité d'entraînement (9) au moyen d'un embrayage à friction (7, 8), l'un des deux arbres d'entrée de transmission (5, 6) étant couplé ou pouvant être couplé en entraînement à une deuxième unité d'entraînement (10), l'embrayage à friction (7, 8) qui est associé à la transmission partielle (3, 4) dont l'arbre d'entrée de transmission (5, 6) est couplé ou peut être couplé en entraînement avec la deuxième unité d'entraînement (10) étant amené à patiner au moins brièvement lors d'une opération de synchronisation pour préparer un changement de vitesse en cas de dysfonctionnement de la deuxième unité d'entraînement (10), de telle sorte que la transmission partielle (3, 4) et la deuxième unité d'entraînement (10) sont réglées sur une vitesse de rotation de synchronisation par l'intermédiaire de la première unité d'entraînement (9), **caractérisé en ce qu'**un saut de vitesse de rotation requis pour régler la vitesse de rotation de synchronisation est réglé essentiellement pour moitié avec l'embrayage à friction respectif (7, 8) si, lors d'un changement de vitesse supérieur requis, la vitesse de rotation de la première unité d'entraînement (9) est supérieure à la vitesse de rotation de synchronisation à régler ou si, lors d'un changement de vitesse inférieur requis, la vitesse de rotation de la première unité d'entraînement (9) est inférieure à la vitesse de rotation de synchronisation à régler.

2. Procédé selon la revendication 1, **caractérisé en ce que** la première unité d'entraînement (9) est réalisée sous la forme d'un moteur à combustion interne (9').

3. Procédé selon la revendication 1 ou 2, **caractérisé en ce que** la deuxième unité d'entraînement (10) est réalisée sous la forme d'une machine électrique (10').

4. Procédé selon la revendication 1, 2 ou 3, **caractérisé en ce qu'**un saut de vitesse de rotation requis pour le réglage de la vitesse de rotation de synchronisation est entièrement supprimé avec l'embrayage à friction (7, 8) respectif si, lors d'un changement de vitesse supérieur requis, la vitesse de rotation de la première unité d'entraînement (9) est inférieure ou égale à la vitesse de rotation de synchronisation à régler ou si, lors d'un changement de vitesse inférieur requis, la vitesse de rotation de la première unité d'entraînement (9) est supérieure ou égale à la vitesse de rotation de synchronisation à régler.

5. Procédé selon la revendication 1, 2 ou 3, **caractérisé en ce que**, dans le cas d'une montée de rapport en traction et dans le cas d'une descente de rapport en poussée, un saut de vitesse de rotation requis pour régler la vitesse de rotation de synchronisation est réglé essentiellement pour moitié avec l'embrayage à friction respectif (7, 8).

6. Procédé selon l'une quelconque des revendications précédentes, **caractérisé en ce que** la transmission à embrayage double (2) présente une première transmission partielle (3) et une deuxième transmission partielle (4), la première transmission partielle (3) comprenant un premier arbre d'entrée de transmission (5) et la deuxième transmission partielle (4) comprenant un deuxième arbre d'entrée de transmission (6), le premier arbre d'entrée de transmission (5) pouvant être couplé à la première unité d'entraînement (9) au moyen d'un premier embrayage à friction (7) et le deuxième arbre d'entrée de transmission (6) pouvant être couplé à la première unité d'entraînement (9) au moyen d'un deuxième embrayage à friction (8) et le deuxième arbre d'entrée de transmission (6) étant couplé ou pouvant être couplé à la deuxième unité d'entraînement (10).
